# EUROPEAN PATENT APPLICATION

(11) **EP 3 547 508 A1**
(43) Date of publication of application: **02.10.2019**
(21) Application number: 19165471.4
(22) Date of filing: 27.03.2019
(51) Int. Cl.: H02K 9/19, H02K 5/20, H02K 9/12, H02K 9/16

(54) **ROTARY ELECTRIC MACHINE**

(30) Priority: 28.03.2018 JP 2018062561
(71) Applicant: Honda Motor Co., Ltd., Tokyo 107-8556 (JP)
(72) Inventor: Seki, Yoshiaki, Saitama, 351-0193 (JP); Imamura, Takehiro, Saitama, 351-0193 (JP); Akamatsu, Ryo, Saitama, 351-0193 (JP); Yoshida, Hideyuki, Saitama, 351-0193 (JP); Yamashita, Hiroshi, Saitama, 351-0193 (JP); Okazawa, Toshio, Saitama, 351-0193 (JP)
(74) Representative: Beder, Jens

(57) **Abstract**

A rotary electric machine (1) includes a rotor (20), a stator (30) including a stator core (31) and a stator coil (50) attached to the stator core (31), the stator (30) being disposed opposed to the rotor (20), and a case accommodating the rotor (20) and the stator (30). In the stator coil (50), coils of a plurality of phases are connected by a neutral point bus bar (60). The neutral point bus bar (60) is provided at a coil end (52) protruding in an axial direction from one end surface of the stator core (50). A cooling pipe (70) for cooling the stator coil (50) is provided inside the case. The cooling pipe (70) includes a first refrigerant supply hole (71) for discharging a refrigerant (R) toward the coil end (52) and a second refrigerant supply hole (72) for discharging the refrigerant (R) toward the neutral point bus bar (60).

## Description

### TECHNICAL FIELD

The present invention relates to a rotary electrical machine which can be mounted on an electric vehicle.

### BACKGROUND ART

In a rotary electric machine, a refrigerant is supplied to a coil end of a stator coil which generates heat when energized so as to cool it. In addition, a temperature of the stator coil is detected by a temperature sensor, and when a detected temperature rises to a predetermined temperature, control such as interrupting energization of the stator coil is performed.

The temperature sensor is attached to a neutral point bus bar which electrically connects coils of each phase of U phase, V phase, and W phase. With respect to attachment of the temperature sensor, there has been known a configuration in which an end portion of the neutral point bus bar is bent into a U-shape and the temperature sensor is sandwiched and held by the U-shape-bent portion (for example, refer to JP-A-2016-123155).

However, in JP-A-2016-123155, in order to attach the temperature sensor, it is necessary to perform a special process of bending the end portion of the neutral point bus bar into the U shape, which requires considerable time and labor.

### SUMMARY

Accordingly, an aspect of the present invention provides a rotary electric machine which can save time and labor from performing a special process on a neutral point bus bar.

According to an embodiment of the present invention, there is provided a rotary electric machine including:
a rotor;
a stator including a stator core and a stator coil attached to the stator core, the stator being disposed to be opposed to the rotor; and
a case accommodating the rotor and the stator,
wherein in the stator coil, coils of a plurality of phases are connected by a neutral point bus bar,
wherein the neutral point bus bar is provided at a coil end protruding in an axial direction from one end surface of the stator core,
wherein a cooling pipe for cooling the stator coil is provided inside the case, and
wherein the cooling pipe includes a first refrigerant supply hole for discharging a refrigerant toward the coil end and a second refrigerant supply hole for discharging the refrigerant toward the neutral point bus bar.

According to the above configuration, since the cooling pipe includes the first refrigerant supply hole for discharging the refrigerant toward the coil end and the second refrigerant supply hole for discharging the refrigerant toward the neutral point bus bar, both the coil end and the neutral point bus bar can be cooled by a single cooling pipe. Particularly, since the neutral point bus bar tends to become high temperature, the neutral point bus bar can be cooled directly by the refrigerant to suppress heat generation of the neutral point bus bar. Accordingly, since it is unnecessary to hold the temperature sensor on the neutral point bus bar, time and labor for performing a special process on the neutral point bus bar can be saved.

### BRIEF DESCRIPTION OF DRAWINGS

Fig. 1 is a sectional view of a rotary electric machine according to an embodiment of the present invention.
Fig. 2 is a partial perspective view of the rotary electric machine in Fig. 1.

### DESCRIPTION OF EMBODIMENTS

Hereinafter, a rotary electric machine according to an embodiment of the present invention will be described with reference to the accompanying drawings.

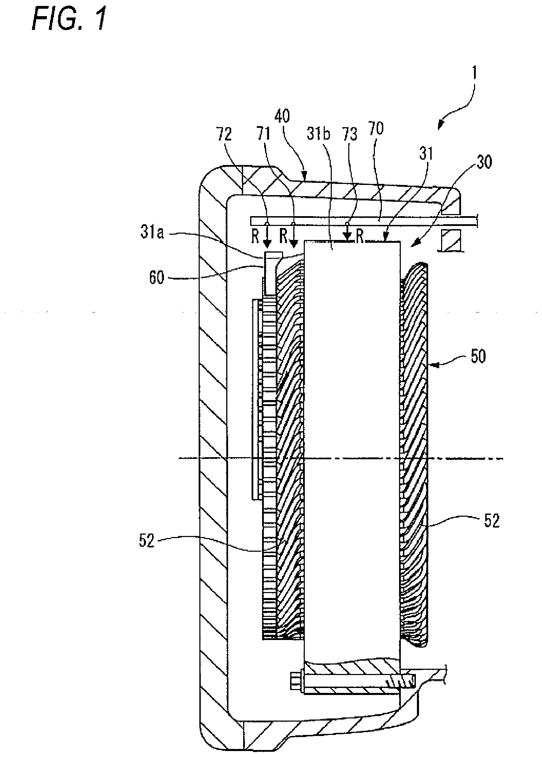

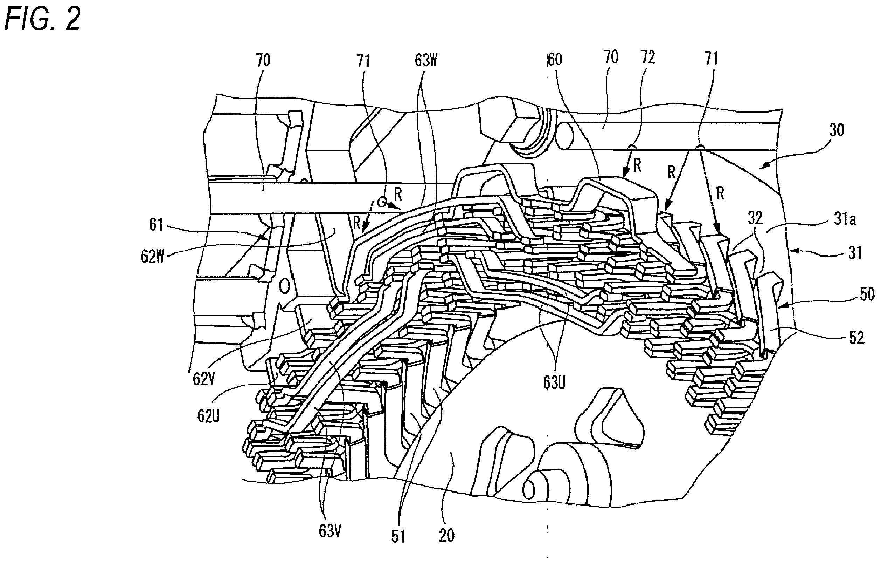

As shown in Figs. 1 and 2, a rotary electric machine 1 includes a rotor 20, a stator 30, and a case 40 accommodating the rotor 20 and the stator 30.

The stator 30 includes a stator core 31, and a stator coil 50 attached to the stator core 31. A plurality of teeth 32 are provided at equal intervals in a peripheral direction on an inner peripheral portion of the stator core 31, and the stator coil 50 is wound around slots formed between the adjacent teeth 32.

The stator coil 50 is composed of a plurality of segment coils 51 having a substantially U shape. The stator coil 50 includes coils of a plurality of phases (U phase, V phase, and W phase), and the coils of the plurality of phases are connected by a neutral point bus bar 60. That is, one end portions of the coils of respective phases are connected to the neutral point bus bar 60. The other end portions of the coils of the respective phases are connected to bus bars 62U, 62V, and 62W of the respective phases provided in a bus bar unit 61 which supplies electric power to the stator coil 50. Besides, in Fig. 2, reference numerals 63U, 63V, and 63W denote bus bars which connect coil loops of the respective phases.

The neutral point bus bar 60 is disposed at an uppermost portion of a coil end 52 protruding in the axial direction from one end surface 31a of the stator core 31.

A cooling pipe 70 for cooling the stator coil 50 is provided inside the case 40. The cooling pipe 70 extends in the axial direction around an upper portion of the stator core 31. The cooling pipe 70 may be disposed at a plurality of positions in a peripheral direction of the stator core 31. Fig. 2 shows two cooling pipes 70. Besides, in the following description, the cooling pipe 70 disposed at an uppermost portion will be described.

The cooling pipe 70 includes a first refrigerant supply hole 71 for discharging a refrigerant R toward the coil end 52, a second refrigerant supply hole 72 for discharging the refrigerant R toward the neutral point bus bar 60, and a third refrigerant supply hole 73 for discharging the refrigerant R toward an outer peripheral surface 31b of the stator core 31. The first refrigerant supply hole 71, the second refrigerant supply hole 72, and the third refrigerant supply hole 73 are spaced apart from each other in an axial direction of the cooling pipe 70, and are provided so as to face an upper portion of the coil end 52, an upper portion of the neutral point bus bar 60, and an upper portion of the outer peripheral surface 31b of the stator core 31, respectively.

Since the cooling pipe 70 includes the first refrigerant supply hole 71 for discharging the refrigerant R toward the coil end 52, the second refrigerant supply hole 72 for discharging the refrigerant R toward the neutral point bus bar 60, and the third refrigerant supply hole 73 for discharging the refrigerant R toward the outer peripheral surface 31b of the stator core 31, the coil end 52, the neutral point bus bar 60 and the stator core 31 can be simultaneously cooled by a single cooling pipe 70. Particularly, since the neutral point bus bar 60 tends to become high temperature, the neutral point bus bar 60 can be cooled directly to suppress heat generation of the neutral point bus bar 60. Accordingly, since unlike the related art, it is unnecessary to hold the temperature sensor on the neutral point bus bar 60, time and labor for performing a special process for holding the temperature sensor in the neutral point bus bar 60 can be saved.

Since the neutral point bus bar 60 is disposed at the uppermost portion of the coil end 52, direct cooling of the neutral point bus bar 60 by the refrigerant R cannot be expected only by supplying the refrigerant R to the coil end 52 as in the related art. However, by discharging the refrigerant R from the cooling pipe 70 toward the neutral point bus bar 60, the neutral point bus bar 60 can be directly cooled by the refrigerant R, and the heat generation of the neutral point bus bar 60 can be reliably suppressed. Accordingly, a heat requirement can be satisfied without measuring a temperature of a neutral point of the stator coil 50.

In Fig. 2, the first refrigerant supply holes 71 are provided at two positions in the peripheral direction of the cooling pipe 70. Accordingly, the refrigerant R is supplied to a wide range of the coil end 52, so that the coil end 52 can be effectively cooled. Meanwhile, the second refrigerant supply hole 72 discharges the refrigerant R at a substantially pinpoint toward the neutral point bus bar 60. Accordingly, the neutral point bus bar 60 can be reliably cooled by the refrigerant R.

The second refrigerant supply hole 72 preferably discharges the refrigerant R toward an uppermost portion of the neutral point bus bar 60. Accordingly, the refrigerant can be spread throughout the neutral point bus bar 60 using gravity, and the neutral point bus bar 60 can be effectively cooled.

The above-described embodiment may be appropriately modified, improved, or the like.

For example, the cooling pipe 70 may be a single continuous pipe or a plurality of pipes connected in parallel.

In addition, the first refrigerant supply hole 71, the second refrigerant supply hole 72, and the third refrigerant supply hole 73 may be provided in one position, or may be provided in a plurality of positions in the peripheral direction of the cooling pipe 70.

In the above-described embodiment, the third refrigerant supply hole 73 is provided in the cooling pipe 70, but the third refrigerant supply hole 73 may be provided in a cooling pipe separate from the cooling pipe 70 including the first refrigerant supply hole 71 and the second refrigerant supply hole 72.

At least the following matters are described in the present specification. Although the corresponding elements or the like in the above-described embodiment are shown in parentheses, the present invention is not limited thereto.
(1) A rotary electric machine (rotary electric machine 1) includes:
   a rotor (rotor 20);
   a stator (stator 30) including a stator core (stator core 31) and a stator coil (stator coil 50) attached to the stator core, the stator being disposed to be opposed to the rotor; and
   a case (case 40) accommodating the rotor and the stator,
   wherein in the stator coil, coils of a plurality of phases are connected by a neutral point bus bar (neutral point bus bar 60),
   wherein the neutral point bus bar is provided at a coil end (coil end 52) protruding in an axial direction from one end surface (one end surface 31a) of the stator core,
   wherein a cooling pipe (cooling pipe 70) for cooling the stator coil is provided inside the case, and
   wherein the cooling pipe includes a first refrigerant supply hole (first refrigerant supply hole 71) for discharging a refrigerant (refrigerant R) toward the coil end and a second refrigerant supply hole (second refrigerant supply hole 72) for discharging the refrigerant toward the neutral point bus bar.
   According to (1), since the cooling pipe includes the first refrigerant supply hole for discharging the refrigerant toward the coil end and the second refrigerant supply hole for discharging the refrigerant toward the neutral point bus bar, both the coil end and the neutral point bus bar can be cooled by a single cooling pipe. Particularly, since the neutral point bus bar tends to become high temperature, the neutral point bus bar can be cooled directly by the refrigerant to suppress heat generation of the neutral point bus bar. Accordingly, since it is unnecessary to hold the temperature sensor on the neutral point bus bar, time and labor for performing a special process on the neutral point bus bar can be saved.
(2) In the rotary electric machine according to (1),
   the cooling pipe includes a third refrigerant supply hole (third refrigerant supply hole 73) for discharging the refrigerant to an outer peripheral surface (outer peripheral surface 31b) of the stator core.
   According to (2), since the cooling pipe includes the third refrigerant supply hole for discharging the refrigerant to the outer peripheral surface of the stator core, in addition to the coil end and the neutral point bus bar, the stator core can also be cooled by a single cooling pipe.
(3) In the rotary electric machine according to (1) or (2),
   the neutral point bus bar is disposed at an uppermost portion of the coil end.
   According to (3), since the neutral point bus bar is disposed at the uppermost portion of the coil end, direct cooling of the neutral point bus bar with the refrigerant cannot be expected only by supplying the refrigerant to the coil end. However, by discharging the refrigerant from the cooling pipe toward the neutral point bus bar, the neutral point bus bar can be directly cooled by the refrigerant, and the heat generation of the neutral point bus bar can be reliably suppressed.
(4) In the rotary electric machine according to (3),
   the second refrigerant supply hole discharges the refrigerant to an uppermost portion of the neutral point bus bar.
   According to (4), the second refrigerant supply hole discharges the refrigerant to the uppermost portion of the neutral point bus bar, so that the refrigerant can be spread throughout the neutral point bus bar using gravity, and the neutral point bus bar can be effectively cooled.

## Claims

1. A rotary electric (1) machine comprising:
a rotor (20);
a stator (30) including a stator core (31) and a stator coil (50) attached to the stator core (31), the stator (30) being disposed to be opposed to the rotor (20); and
a case (40) accommodating the rotor (20) and the stator (30),
wherein in the stator coil (50), coils of a plurality of phases are connected by a neutral point bus bar (60),
wherein the neutral point bus bar (60) is provided at a coil end (52) protruding in an axial direction from one end surface (31a) of the stator core (31),
wherein a cooling pipe (70) for cooling the stator coil (50) is provided inside the case (40), and
wherein the cooling pipe (70) includes a first refrigerant supply hole (71) for discharging a refrigerant (R) toward the coil end (52) and a second refrigerant supply hole (72) for discharging the refrigerant (R) toward the neutral point bus bar (60).

2. The rotary electric machine (1) according to claim 1,
wherein the cooling pipe (70) includes a third refrigerant supply hole (73) for discharging the refrigerant (R) to an outer peripheral surface (31b) of the stator core (31).

3. The rotary electric machine (1) according to claim 1 or 2,
wherein the neutral point bus bar (60) is disposed at an uppermost portion of the coil end (52).

4. The rotary electric machine (1) according to claim 3,
wherein the second refrigerant supply hole (72) discharges the refrigerant (R) to an uppermost portion of the neutral point bus bar (60).
